# EUROPEAN PATENT APPLICATION

(11) **EP 3 992 602 A1**
(43) Date of publication of application: **04.05.2022**
(21) Application number: 20832074.7
(22) Date of filing: 25.06.2020
(51) Int. Cl.: G01M 17/007, G06Q 50/10, G06N 20/00

(54) **MANAGEMENT SYSTEM, MAINTENANCE SCHEDULE DETERMINATION METHOD, COMPUTER PROGRAM, AND LEARNED MODEL GENERATION METHOD**

(30) Priority: 28.06.2019 JP 2019121850
(71) Applicant: HORIBA, Ltd., Minami-ku Kyoto-shi Kyoto 601-8510 (JP)
(72) Inventor: ITO, Kazuya, Kyoto-shi, Kyoto 601-8510 (JP)
(74) Representative: Müller Hoffmann & Partner
(86) International application number: PCT/JP2020/024941
(87) International publication number: WO 2020/262510

(57) **Abstract**

Provided are a management system, a maintenance schedule determination method, a computer program, and a trained model generation method that can achieve the efficient maintenance of an analysis system.

A management system includes: an acquisition unit that acquires, as information related to components of an analysis device analyzing a performance of a vehicle or a specimen which is a portion of the vehicle, at least one of warning information indicating an event leading to a failure of the component, information related to a sensitivity or performance of the component, and information related to a life limit of the component from the analysis device; and a determination unit that uses a trained model which has been trained so as to output an efficient maintenance schedule in response to an input of the information related to the components of the analysis device and inputs the information acquired by the acquisition unit to the trained model to determine the maintenance schedule of the analysis device.

## Description

### [Technical Field]

The present disclosure relates to a management system, a maintenance schedule determination method, a computer program, and a trained model generation method that manage the maintenance of an analysis system which performs analysis related to vehicles such as cars.

### [Background Art]

For example, an analysis device that analyzes components of exhaust gas emitted from a specimen is used in order to develop and evaluate a vehicle or the specimen which is a portion of the vehicle. Maintenance, such as regular adjustment and component replacement, is indispensable in order to maintain the analysis accuracy of the analysis device.

Patent Document 1 discloses a test system which can simply and preferentially display, particularly, urgent maintenance management information for all test devices connected to a device management device such that reliable maintenance and inspection can be performed. The device management device of this test system displays information output from the test device on a display such that the information can be deleted, switched, or moved. The device management device preferentially displays three alarm icons whose form is changed according to content indicated by each of three alarm information items, that is, sensitivity alarm information indicating a reduction in the sensitivity of the test device, accumulated operating time alarm information which is alarm information related to the accumulated operating time of the test device, and inspection date and time alarm information which is information indicating that the inspection date and time of the test device is approaching or has passed, regardless of the display of these information items.

### [Prior Art Document]

### [Patent Document]

[Patent Document 1] Japanese Patent Laid-Open Publication No. 2013-245964

### [Summary of Invention]

### [Problems to be Solved by Invention]

Regular maintenance is indispensable for the analysis device. However, since the analysis device is not available during maintenance, it is desirable to perform efficient maintenance.

The present disclosure has been made in view of these circumstances, and an object of the present disclosure is to provide a management system, a maintenance schedule determination method, a computer program, and a trained model generation method that determine a maintenance schedule capable of achieving the efficient maintenance of an analysis device.

### [Means for Solving Problems]

A management system according to the present disclosure includes: an acquisition unit that acquires, as information related to a plurality of components of devices included in each of a plurality of analysis systems each of which includes an analysis device analyzing a performance of a vehicle or a specimen which is a portion of the vehicle and a related device supporting analysis by the analysis device, at least one of warning information indicating an event leading to a failure of the component, information related to a sensitivity or performance of the component, and information related to a life limit of the component from the plurality of analysis systems; and a determination unit that determines a maintenance schedule of the analysis system on the basis of the information acquired by the acquisition unit.

Moreover, in the management system according to the present disclosure, the determination unit uses a trained model that has been trained so as to output an efficient maintenance schedule in response to an input of information related to the components of the devices included in the analysis system and inputs the information acquired by the acquisition unit to the trained model to determine the maintenance schedule of the analysis system.

Moreover, in the management system according to the present disclosure, the determination unit determines the maintenance schedule such that an execution efficiency of the analysis by the analysis system or a maintenance efficiency of the analysis system is high.

Moreover, in the management system according to the present disclosure, the trained model is a model that has been subjected to reinforcement learning such that a high reward related to the maintenance schedule is obtained.

Moreover, in the management system according to the present disclosure, the trained model is a model that has been trained by reinforcement learning which gives a high reward in a case in which an operating rate of the analysis system is high.

Moreover, in the management system according to the present disclosure, the trained model is a model that has been trained by reinforcement learning which gives a high reward in a case in which a burden related to a maintenance of the analysis system is low.

Moreover, in the management system according to the present disclosure, the trained model is a model that has been trained by reinforcement learning which gives a high reward in a case in which a frequency of occurrence of a defect in the analysis system is low.

Moreover, in the management system according to the present disclosure, the trained model outputs a maintenance schedule of a plurality of analysis devices in response to the input of the information related to the components of the plurality of analysis systems, the acquisition unit acquires the information related to the components from the plurality of analysis systems, and the determination unit inputs the information related to the components of the devices included in the plurality of analysis systems acquired by the acquisition unit to the trained model to determine the maintenance schedule of the plurality of analysis systems.

Moreover, the management system according to the present disclosure, further comprising: an operation schedule acquisition unit that acquires an operation schedule of the analysis system, wherein the trained model outputs the maintenance schedule in response to the input of the information related to the components of the devices included in the analysis system and the operation schedule of the analysis system.

Moreover, in the management system according to the present disclosure, the related devices of the analysis system include a dynamometer that absorbs torque generated by the vehicle or the specimen, and the analysis device analyzes gas emitted from the vehicle or the specimen.

Moreover, in the management system according to the present disclosure, the acquisition unit acquires information from the plurality of analysis systems, and the determination unit includes a first determination unit that determines a maintenance deadline of each of the components on the basis of the information acquired by the acquisition unit and a second determination unit that determines a maintenance schedule, in which a maintenance date of a component having a late maintenance deadline has been set to a maintenance date of a component having an early maintenance deadline, for each of the analysis systems on the basis of the date determined by the first determination unit.

Moreover, in the management system according to the present disclosure, the second determination unit determines a maintenance schedule in which the maintenance dates of a plurality of components whose maintenance deadlines determined by the first determination unit are within a predetermined period have been set to the same date.

Moreover, the management system according to the present disclosure, further comprising: an operation schedule acquisition unit that acquires an operation schedule of the analysis system, wherein the second determination unit determines the maintenance schedule of the analysis system, avoiding a period for which the analysis system is operated, on the basis of the operation schedule acquired by the operation schedule acquisition unit.

Moreover, the management system according to the present disclosure, further comprising: a notification unit that notifies a predetermined terminal device of the maintenance schedule determined by the determination unit.

Moreover, a maintenance schedule determination method according to the present disclosure, comprising: acquiring, as information related to a plurality of components of devices included in each of a plurality of analysis systems each of which includes an analysis device analyzing a performance of a vehicle or a specimen which is a portion of the vehicle and a related devices supporting analysis by the analysis device, at least one of warning information indicating an event leading to a failure of the component, information related to a sensitivity or performance of the component, and information related to a life limit of the component from the plurality of analysis systems; and determining a maintenance schedule of the analysis system on the basis of the acquired information.

Moreover, a computer program according to the present disclosure, that causes a computer to perform a process including: acquiring, as information related to a plurality of components of devices included in each of a plurality of analysis systems each of which includes an analysis device analyzing a performance of a vehicle or a specimen which is a portion of the vehicle and a related devices supporting analysis by the analysis device, at least one of warning information indicating an event leading to a failure of the component, information related to a sensitivity or performance of the component, and information related to a life limit of the component from the plurality of analysis systems; and determining a maintenance schedule of the analysis system on the basis of the acquired information.

Moreover, a trained model generation method according to the present disclosure, comprising: performing reinforcement learning, which gives a reward corresponding to an operating rate of an analysis system, a burden related to a maintenance of the analysis system, or a frequency of occurrence of a defect in the analysis system, on a learning model, which receives, as information related to a plurality of components of devices included in a plurality of the analysis systems each of which includes an analysis device analyzing a performance of a vehicle or a specimen which is a portion of the vehicle and a related devices supporting analysis by the analysis device, at least one of warning information indicating an event leading to a failure of the component, information related to a sensitivity or performance of the component, and information related to a life limit of the component as an input and outputs a maintenance schedule of the analysis system, to generate a trained model.

In the present disclosure, the maintenance schedule related to various components of the analysis device that analyzes a vehicle, such as a car, or a specimen which is a portion of the vehicle is determined using the trained model that has been trained in advance. The trained model outputs an efficient maintenance schedule of the analysis device in response to the input of information related to the components of the analysis device. The information related to the components of the analysis device may include, for example, the warning information that leads to a failure of the component, the information related to the sensitivity or performance of the component, and the information related to the life limit of the component. The maintenance schedule of the analysis device can be determined by acquiring at least one of these information items, inputting the acquired information to the trained model, and acquiring the maintenance schedule output by the trained model. The efficient maintenance of the analysis device can be expected by determining the maintenance schedule using an appropriately trained model.

In addition, in the present disclosure, the maintenance schedule is determined such that the execution efficiency of the analysis process for the vehicle or the specimen by the analysis device or the maintenance efficiency of the analysis device is high. Therefore, the efficient maintenance of the analysis device can be expected.

Further, in the present disclosure, the trained model has been trained in advance such that a high reward for the maintenance schedule is obtained. Therefore, the trained model that has been trained can output an efficient maintenance schedule of the analysis device in response to the input of the information related to the components.

Furthermore, in the present disclosure, the reinforcement learning that gives a high reward in a case in which the operating rate of the analysis device is high is performed to generate the trained model that outputs the maintenance schedule. Therefore, the maintenance schedule is determined such that the operating rate of the analysis device is high, and it is possible to achieve efficient maintenance.

Moreover, in the present disclosure, the reinforcement learning that gives a high reward in a case in which the burden (for example, the number of maintenance operations, the maintenance time, or the maintenance cost) related to the maintenance of the analysis device is low is performed to generate the trained model that outputs the maintenance schedule. Therefore, the maintenance schedule is determined such that the burden related to the maintenance is reduced, and it is possible to achieve efficient maintenance.

In addition, in the present disclosure, the reinforcement learning that gives a high reward in a case in which the frequency of occurrence of defects in the analysis device is low is performed to generate the trained model that outputs the maintenance schedule. Therefore, the maintenance schedule is determined so as to suppress the occurrence of defects in the analysis device, and it is possible to efficiently use the analysis device.

Further, in the present disclosure, the trained model outputs the maintenance schedule of a plurality of analysis devices in response to the input of the information related to the components of the plurality of analysis devices. For example, the trained model has been trained such that a high reward related to the maintenance schedule is obtained for the plurality of analysis devices. Information is acquired from each of the plurality of analysis devices and is input to the trained model to determine the maintenance schedule for the components of the plurality of analysis devices.

Furthermore, in the present disclosure, the trained model further receives the operation schedule of the analysis device as an input and outputs the maintenance schedule corresponding to the operation schedule. Therefore, for example, the trained model can determine the maintenance schedule while avoiding the period for which the analysis device needs to be operated, and it is possible to achieve the efficient maintenance of the analysis device.

Moreover, in the present disclosure, the reinforcement learning that gives a reward corresponding to the operating rate of the analysis device, the burden (for example, the number of maintenance operations, the maintenance time, or the maintenance cost) related to the maintenance of the analysis device, the frequency of occurrence of defects in the analysis device, or the like is performed on the learning model, which receives information related to the components of the analysis device as an input and outputs the maintenance schedule of the components, to generate the trained model. Therefore, it is possible to determine the maintenance schedule considering the operating rate of the analysis device, the burden related to the maintenance, the frequency of occurrence of defects in the analysis device, and the like and to achieve efficient maintenance.

Moreover, in the present disclosure, as the information related to a plurality of components, for example, at least one of the warning information that leads to a failure of the component, the information related to the sensitivity or performance of the component, and the information related to the life limit of the component is acquired from a plurality of analysis devices that analyze the performance of a vehicle, such as a car, or a specimen which is a portion of the vehicle, and the maintenance deadline of each component is determined. Then, the maintenance schedule, in which a maintenance date of a component having a late maintenance deadline has been set to a maintenance date of a component having an early maintenance deadline, is determined for each analysis device on the basis of the deadline of each component. Therefore, it is possible to determine the maintenance schedule of a plurality of analysis devices in consideration of the maintenance deadline of a plurality of components of each analysis device, and the efficient maintenance of the plurality of analysis devices can be expected.

In addition, in the present disclosure, the maintenance date is determined for each component, and the maintenance schedule, in which the maintenance dates of a plurality of components whose maintenance deadlines are within a predetermined period have been set to the same date, is determined. Therefore, it is possible to prevent the maintenance dates of a plurality of components whose maintenance deadlines are separated more than necessary from being set to the same date.

Further, in the present disclosure, the operation schedule of the analysis device is further acquired, and the maintenance schedule of the analysis device is determined avoiding the period for which the analysis device is operated. Therefore, it is possible to perform maintenance for the period for which the analysis device is not operated and to reliably operate the analysis device for the period for which the analysis device needs to be operated.

### [Effect of Invention]

According to the present disclosure, it is possible to determine a maintenance schedule that can achieve the efficient maintenance of an analysis system.

### [Brief Description of Drawings]

FIG. 1 is a schematic diagram describing the outline of a management system for a vehicle test facility according to an embodiment.
FIG. 2 is a block diagram illustrating the configuration of a management server according to this embodiment.
FIG. 3 is a schematic diagram illustrating an example of the configuration of a schedule determination model according to this embodiment.
FIG. 4 is a schematic diagram illustrating an example of an analysis result display screen by the management server.
FIG. 5 is a schematic diagram illustrating an example of an alert notification screen by the management server.
FIG. 6 is a schematic diagram illustrating an example of a deadline notification screen by the management server.
FIG. 7 is a schematic diagram illustrating an example of a sensitivity history screen by the management server.
FIG. 8 is a schematic diagram illustrating an example of a maintenance schedule display screen by the management server.
FIG. 9 is a schematic diagram illustrating another example of the maintenance schedule display screen by the management server.
FIG. 10 is a flowchart illustrating the procedure of a maintenance schedule determination process performed by the management server according to this embodiment.
FIG. 11 is a flowchart illustrating the procedure of a process of training the schedule determination model performed by the management server according to this embodiment.
FIG. 12 is a schematic diagram illustrating an example of a maintenance deadline of each component.
FIG. 13 is a schematic diagram illustrating an example of a maintenance schedule summarized for each analysis device.
FIG. 14 is a schematic diagram illustrating an example of an operation schedule of the analysis devices.
FIG. 15 is a schematic diagram illustrating an example of a maintenance schedule considering the operation schedule.
FIG. 16 is a flowchart illustrating the procedure of a maintenance schedule determination process performed by a management server according to Embodiment 2.

### [Mode for Carrying out Invention]

A specific example of a management system for an analysis device according to an embodiment of the present disclosure will be described below with reference to the drawings. In addition, the present disclosure is not limited to the example, is defined by the scope of the claims, and is intended to include all modifications within the meaning and scope equivalent to the scope of the claims.

### <Outline of System>

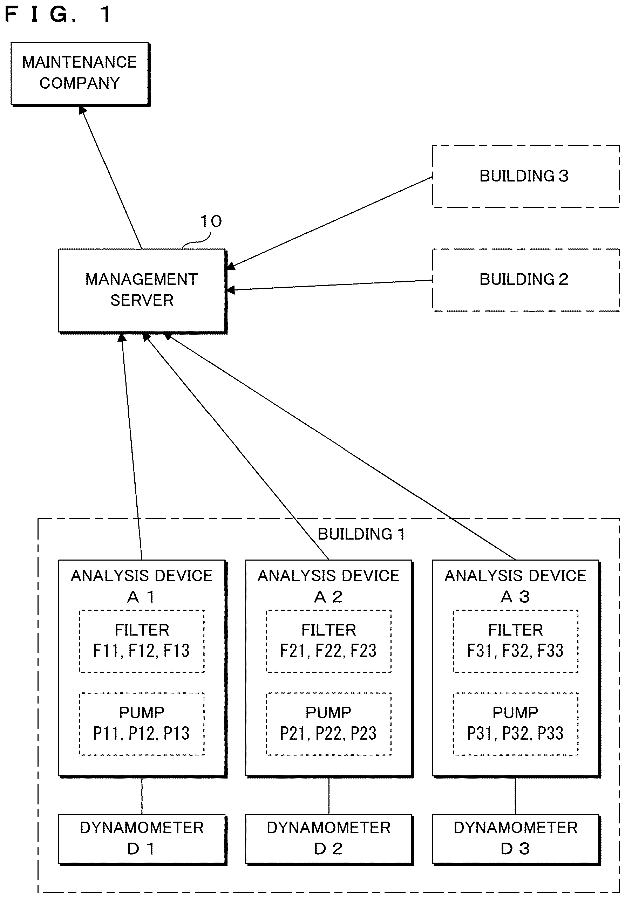

FIG. 1 is a schematic diagram describing the outline of the management system for the analysis device according to this embodiment. The management system according to this embodiment is a system that manages a maintenance schedule of an analysis device which analyzes components included in exhaust gas emitted from a vehicle, such as a car, or a specimen which is a portion of the vehicle. In the example illustrated in FIG. 1, for example, a plurality of buildings 1 to 3 are provided in a car manufacturing factory or a test site, and a plurality of analysis devices are installed in each of the buildings 1 to 3. For example, three analysis devices A1 to A3 are installed in the building 1, and each of the analysis devices A1 to A3 can be independently operated to analyze the exhaust gas of the car. In addition, each of the analysis devices A1 to A3 may include a plurality of analysis units that analyze the exhaust gas. This makes it possible for each of the analysis devices A1 to A3 to perform an analysis process on a plurality of objects to be analyzed at the same time or in parallel.

Further, the specimen may be, for example, a vehicle including an internal combustion engine or a portion of the vehicle, such as an engine, may be a hybrid vehicle (HV) including an internal combustion engine and an electric motor or a portion of the hybrid vehicle, may be an electric vehicle (EV) including an electric motor and a battery or a portion of the electric vehicle, and may be a fuel cell vehicle (FV) including an electric motor and a fuel cell or a portion of the fuel cell vehicle. Furthermore, the analysis device may not only analyze components of the exhaust gas emitted from the specimen, but also analyze the performance of the specimen. For example, the analysis device may analyze the traveling performance of the specimen, may test the performance of tires, brakes, engines, powertrains, and the like, and may calculate the amount of fuel consumed by the specimen, the amount of electricity (electricity cost) consumed by the electric motor, or the amount of hydrogen or the like consumed by the fuel cell.

Each of the analysis devices A1 to A3 analyzes the exhaust gas of the car in cooperation with an automatic driving device (not illustrated), dynamometers D1 to D3, and the like. The automatic driving device is a device that automatically operates, for example, the accelerator and brake of the car. The dynamometers D1 to D3 are devices that absorb torque generated by the engine of the car or the like and control the rotation speed and torque of the engine or the like. The dynamometers D1 to D3 included in the analysis devices A1 to A3 may be, for example, any of chassis dynamometers, engine dynamometers, and brake dynamometers. For example, the chassis dynamometer is a roller type using a roller on which the wheels of the car are placed, a connection type which is connected to an axle, or the like and is a device for reproducing the traveling state of the car. The car is driven in a pseudo manner in cooperation with the automatic driving device and the chassis dynamometer, and the analysis device acquires the exhaust gas of the car emitted during driving and analyzes, for example, components of the exhaust gas. However, the automatic driving device is not indispensable, and a person may drive the car and perform analysis instead of the automatic driving device. In this embodiment, the analysis devices A1 to A3 test the vehicle which is the specimen using the chassis dynamometer. However, the present disclosure is not limited thereto. For example, the analysis devices A1 to A3 may test the performance of the engine using the engine dynamometer or may test the performance of the power train using the dynamometer.

Each of the analysis devices A1 to A3 includes a plurality of components that need to be replaced regularly. In this embodiment, a filter and a pump will be described as an example of the components that need to be replaced. A replacement period is set for each component, and the components are replaced in the maintenance of the analysis devices A1 to A3. However, the components of the analysis devices A1 to A3 are not limited to the filter and the pump, and various other components may be provided in the analysis devices A1 to A3. Further, the maintenance of the analysis devices A1 to A3 may include not only the replacement of the components but also the inspection or adjustment of the components. In the example illustrated in FIG. 1, the analysis device A1 includes three filters F11 to F13 and three pumps P11 to P13 as the components that need to be replaced. The analysis device A2 includes three filters F21 to F23 and three pumps P21 to P23. The analysis device A3 includes three filters F31 to F33 and three pumps P31 to P33.

Each of the analysis devices A1 to A3 can perform wired or wireless communication to transmit and receive information to and from a management server 10. The management server 10 is a device that is provided in, for example, a supervision office or the like different from the buildings 1 to 3 and is used by an administrator who manages a car manufacturing factory or a test site. In this embodiment, the management server 10 acquires various kinds of information from each of the analysis devices A1 to A3 provided in each of the buildings 1 to 3 and holds the acquired information. The management server 10 performs a process that determines the maintenance (replacement) date of the components in each of the analysis devices A1 to A3 on the basis of the acquired various kinds of information and determines the maintenance schedule of each of the analysis devices A1 to A3. In addition, the management server 10 may transmit a maintenance request to a maintenance company or the like for the analysis devices A1 to A3 according to, for example, the determined maintenance schedule.

The management server 10 acquires, as information related to a component, warning information indicating an event leading to a failure of the component, information related to the detection sensitivity or performance of the component, or information related to the quality life limit of the component from each of the analysis devices A1 to A3. The warning information indicating the event leading to the failure includes, for example, at least one of an alarm, advance notification information for the alarm (Alarm/Pre-Caution), and advance notification information for a performance check cycle (Notification for Quality Check). Each of the alarm and the pre-caution information is information for notifying the administrator or the like of information related to the failure of the component. First, the pre-caution information is output as the deterioration of the component progresses. When the deterioration further progresses, the alarm is output. The analysis devices A1 to A3 compare a value related to the performance or the like of the components, such as the filters, the pumps, and various analysis units, with a predetermined first threshold value and output pre-caution information in a case in which the value is greater than the first threshold value. Further, the analysis devices A1 to A3 output the alarm in a case in which the value related to the performance or the like of the component is greater than a second threshold value that is set under a stricter condition than the first threshold value. In addition, the notification for quality check is to notify the performance check cycle of the components, such as the filters, the pumps, and various analysis units, in advance. The analysis devices A1 to A3 output the notification for quality check in a stage that is a predetermined period before the performance check cycle.

The information related to the detection sensitivity or performance of the components includes, for example, at least one of various kinds of information, such as information related to a change in performance over time (Quality Check), a flow rate, the concentration of total hydrocarbons as a background (THC Background), the sensitivity of various analyzers, and reactor pressure. The information related to the quality life limit of the component is, for example, at least one of the cumulative operating time (cumulative usage time) of the component, advance notification information for the cumulative operating time (Notification for Hour-Meter), and the number of days left until a given replacement time. However, the above-mentioned information is an example, and the present disclosure is not limited thereto. For example, the management server 10 may acquire any information other than the above-mentioned information from the analysis devices A1 to A3.

In this embodiment, the management server 10 acquires at least information that can be used to determine the maintenance deadline of the filter and the pump, which are components that need to be replaced regularly, from each of the analysis devices A1 to A3. For example, in a case in which the upper limit of the usage time is set for the components, the management server 10 can acquire information related to the usage time of the component and compare the information with the upper limit to determine the maintenance deadline. Further, for example, in a case in which maintenance is performed with the deterioration of the performance of the component, the management server 10 can acquire information indicating the performance of the component and compare the information with a threshold value which is a criterion for determining the deterioration of the performance to determine the maintenance deadline. In addition, the methods for determining the maintenance deadline are examples, and the present disclosure is not limited to the methods.

The management server 10 determines the maintenance schedule of the analysis devices A1 to A3 on the basis of the information acquired from the analysis devices A1 to A3. The management server 10 determines the maintenance schedule such that burdens, such as the number of maintenance operations, maintenance time, and maintenance cost of the analysis devices A1 to A3, are reduced as much as possible or that the frequency of occurrence of defects in the analysis devices A1 to A3 is reduced as much as possible, in order to increase, for example, the operating rate of the analysis devices A1 to A3 as much as possible. In this embodiment, the management server 10 is equipped with artificial intelligence (AI) that determines the maintenance schedule of the analysis devices A1 to A3, and the AI determines the maintenance schedule on the basis of various kinds of information acquired from the analysis devices A1 to A3.

In addition, the management server 10 can receive the input of information related to the operation schedule of the analysis devices A1 to A3, that is, a schedule for performing analysis using the analysis devices A1 to A3. In a case in which the operation schedule is input, the AI of the management server 10 determines the maintenance schedule of the analysis devices A1 to A3 such that the day or time when the analysis devices A1 to A3 need to be operated is avoided and the analysis devices A1 to A3 are available at this operation date and time. However, the reception of the input of the operation schedule of the analysis devices A1 to A3 by the management server 10 is not essential, and the management server 10 may be configured not to perform the determination of the schedule considering the operation schedule.

Further, the management server 10 can display various kinds of information acquired from the analysis devices A1 to A3, the maintenance schedule determined by the AI, and the like on a device, such as a display, in various aspects. The administrator and the like can check the operating state of the analysis devices A1 to A3, the presence or absence of an abnormality, and the like on the basis of the information displayed by the management server 10.

### <Configuration of Device>

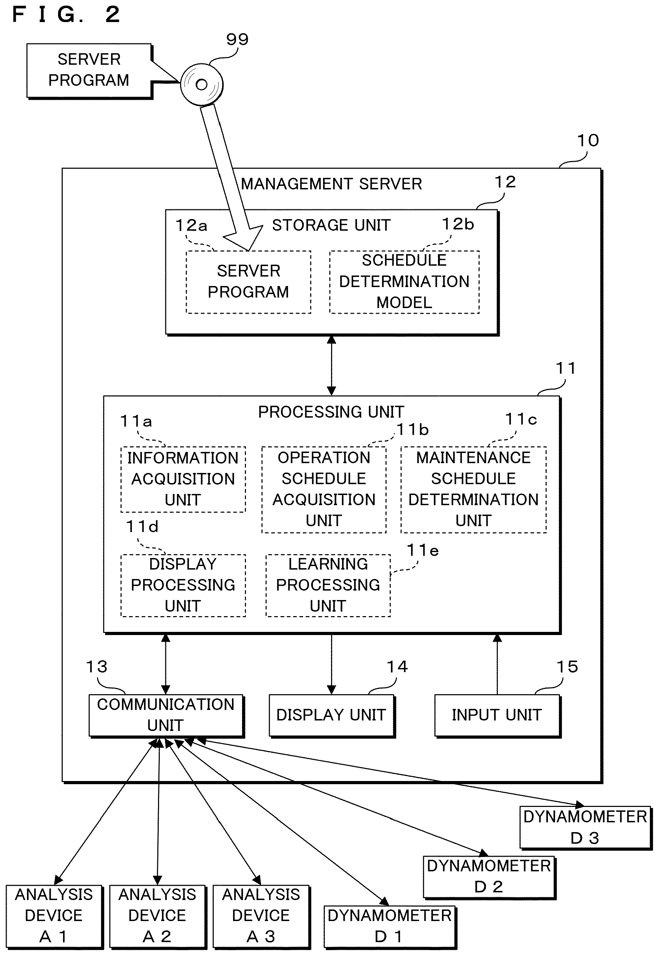

FIG. 2 is a block diagram illustrating the configuration of the management server 10 according to this embodiment. The management server 10 according to this embodiment includes a processing unit (processor) 11, a storage unit (storage) 12, a communication unit (transceiver) 13, a display unit (display) 14, an input unit (input device) 15, and the like. The processing unit 11 is configured using an arithmetic processing unit such as a central processing unit (CPU), a micro-processing unit (MPU), or a graphics processing unit (GPU). The processing unit 11 reads a server program 12a stored in the storage unit 12 and executes the server program 12a to perform, for example, a process of acquiring information from the analysis devices A1 to A3 and a process of determining the maintenance schedule on the basis of the acquired information.

For example, the storage unit 12 is configured using a large-capacity storage device such as a hard disk. The storage unit 12 stores various programs executed by the processing unit 11 and various kinds of data required for the processes of the processing unit 11. In this embodiment, the storage unit 12 stores the server program 12a executed by the processing unit 11 and a schedule determination model 12b as a trained model (identifier).

The communication unit 13 can communicate with various devices through a wired or wireless network. In this embodiment, the communication unit 13 communicates with devices, such as the plurality of analysis devices A1 to A3 and dynamometers D1 to D3 provided in a plurality of buildings 1 to 3, through the network. The communication unit 13 transmits the data given by the processing unit 11 to other devices and gives the data received from other devices to the processing unit 11.

The display unit 14 is configured using a liquid crystal display or the like and displays various images, characters, and the like. The display unit 14 displays various images on the basis of the processes of the processing unit 11. The input unit 15 is configured using an input device such as a keyboard or a mouse. Further, the input unit 15 may be configured using a touch sensor that is provided on a surface of the display unit 14. The input unit 15 receives various input operations of the user and notifies the processing unit 11 of the content of the received operations.

In addition, the storage unit 12 may be an external storage device connected to the management server 10. Further, the management server 10 may be a multi-computer that is configured to include a plurality of computers or may be a virtual machine that is virtually constructed by software. Furthermore, the management server 10 is not limited to the above configuration and may include, for example, a reading unit that reads information stored in a portable storage medium. In addition, the management server 10 may be connected as an external device without including the display unit 14, the input unit 15, and the like.

For example, the server program 12a may be written to the storage unit 12 in the manufacturing stage of the management server 10. For example, the management server 10 may acquire the server program 12a, which is distributed by another remote server device or the like, using communication. For example, for the server program 12a, the management server 10 may read the server program 12a which is recorded on a recording medium 99, such as a memory card or an optical disk, and store the server program 12a in the storage unit 12. For example, a writing device may read the server program 12a recorded on the recording medium 99 and write the server program 12a to the storage unit 12 of the management server 10. The server program 12a may be provided in an aspect in which it is distributed through the network or may be provided in an aspect in which it is recorded on the recording medium 99.

The schedule determination model 12b is used to implement the AI of the management server 10 and is a trained model which has been subjected to reinforcement learning in advance. The trained model performs predetermined calculation on the input value and outputs the calculation result. Data, such as coefficients of a function for defining the calculation and threshold values, is stored as the schedule determination model 12b in the storage unit 12. The schedule determination model 12b is a trained model that has been trained so as to receive the information acquired from the analysis devices A1 to A3 as an input and to output the maintenance schedule of the analysis devices A1 to A3 with respect to the input. The processing unit 11 that executes the server program 12a can read the data stored as the schedule determination model 12b and perform calculation for determining the maintenance schedule of the analysis devices A1 to A3.

Furthermore, in the management server 10 according to this embodiment, the processing unit 11 reads the server program 12a stored in the storage unit 12 and executes the server program 12a such that an information acquisition unit 11a, an operation schedule acquisition unit 11b, a maintenance schedule determination unit 11c, a display processing unit 11d, a learning processing unit 11e, and the like are implemented as software-based functional blocks. The information acquisition unit 11a performs a process of communicating with the analysis devices A1 to A3 using the communication unit 13 to repeatedly acquire predetermined information from the analysis devices A1 to A3. The information acquisition unit 11a stores and accumulates the acquired information in the storage unit 12.

The operation schedule acquisition unit 11b performs a process of receiving an operation schedule input operation of the administrator through the input unit 15 to acquire the operation schedule of the analysis devices A1 to A3. However, the management server 10 may determine the maintenance schedule without considering the operation schedule. In this case, the management server 10 may not include the operation schedule acquisition unit 11b. The operation schedule acquisition unit 11b stores information of the acquired operation schedule in the storage unit 12. Alternatively, for example, in a case in which an application program for schedule management is installed in the management server 10, the administrator may use the application program to input the operation schedule of the analysis devices A1 to A3, and the operation schedule acquisition unit 11b may acquire data of the operation schedule from the application program. The operation schedule acquired by the operation schedule acquisition unit 11b is, for example, information indicating that the analysis device A1 tests a car from 10:00 to 16:00 on April 15.

The maintenance schedule determination unit 11c performs a process of determining the maintenance schedule of the analysis devices A1 to A3 to be managed. The maintenance schedule determination unit 11c determines the maintenance schedule using the schedule determination model 12b stored in the storage unit 12. The maintenance schedule determination unit 11c determines the maintenance schedule such that the execution efficiency of the analysis by the analysis devices A1 to A3 or the maintenance efficiency of the analysis devices is high. The schedule determination model 12b is a trained model which has been subjected to the reinforcement learning so as to receive information that can be acquired from the analysis devices A1 to A3 and the operation schedule of the analysis devices A1 to A3 as an input and to output the operation schedule of the analysis devices A1 to A3. The schedule determination model 12b has been subjected to the reinforcement learning so as to output the maintenance schedule in which the execution efficiency of the analysis by the analysis devices A1 to A3 or the maintenance efficiency of the analysis devices is high. The maintenance schedule determination unit 11c inputs the information acquired by the information acquisition unit 11a and the operation schedule acquired by the operation schedule acquisition unit 11b to the schedule determination model 12b and acquires the maintenance schedule output by the schedule determination model 12b to determine the maintenance schedule of the analysis devices A1 to A3.

The display processing unit 11d performs a process of displaying various kinds of information on the display unit 14. For example, the display processing unit 11d displays the maintenance schedule of the analysis devices A1 to A3 determined by the maintenance schedule determination unit 11c on the display unit 14. In addition, for example, the display processing unit 11d displays various kinds of information related to the analysis devices A1 to A3 acquired by the information acquisition unit 11a on the display unit 14 in various display forms.

The learning processing unit 11e performs a process of training (retraining) the schedule determination model 12b. The learning processing unit 11e performs the reinforcement learning on the schedule determination model 12b using learning data in which the information related to the analysis devices A1 to A3 and the input information of the operation schedule are associated with a reward for the maintenance schedule determined by the schedule determination model 12b with respect to the input information. The learning processing unit 11e re-trains the schedule determination model 12b, for example, once a month, using the information accumulated for one month. The learning processing unit 11e may perform a process of calculating a reward for the maintenance schedule on the basis of the information accumulated for this period. In addition, the process of training the schedule determination model 12b may be performed by another server device, and the management server 10 may only accumulate the information used as the learning data.

### <Schedule Determination Model>

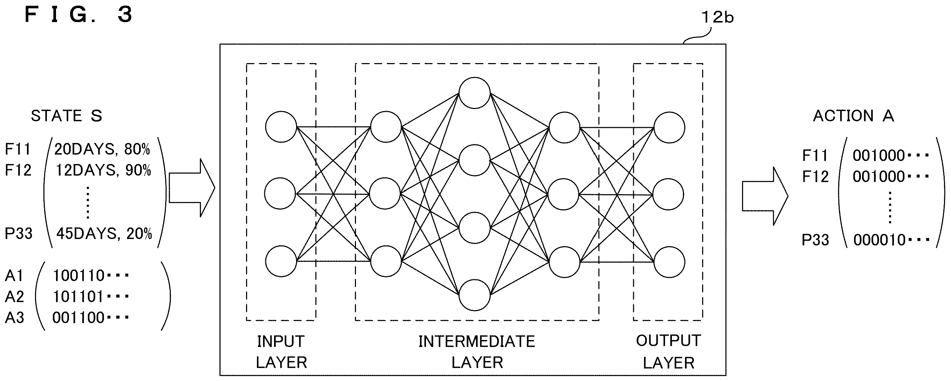

FIG. 3 is a schematic diagram illustrating an example of the configuration of the schedule determination model 12b according to this embodiment. In this embodiment, the schedule determination model 12b has a neural network structure in which a plurality of neurons are connected to each other. Since the neural network is the existing technique, the detailed description thereof will not be repeated. However, the neuron is an element that performs calculation on a plurality of inputs and outputs one value as the result of the calculation. The neurons have information of a weighting coefficient, a threshold value, and the like used in calculation. A learning model of the neural network includes an input layer that receives a plurality of input values, an intermediate layer that performs a calculation process on the data received by the input layer, and an output layer that aggregates the calculation result of the intermediate layer and outputs a plurality of values. A learning process, such as deep learning or reinforcement learning, is a process that sets appropriate values as the coefficient, threshold value, and the like of each neuron constituting the neural network using a large amount of learning data that is given in advance.

The schedule determination model 12b according to this embodiment is a trained model obtained by performing the reinforcement learning on the learning model of the neural network and is obtained by, for example, a Deep Q-Network (DQN) reinforcement learning method. In the schedule determination model 12b, vector information of a state S is input to the input layer, and vector information corresponding to an action A to be performed for the state S is output from the output layer.

In this embodiment, the state S input to the schedule determination model 12b includes two types of information, that is, vector information, in which information related to each component of the analysis devices A1 to A3 is arranged in a predetermined order, and the operation schedule of each of the analysis devices A1 to A3. However, the input to the schedule determination model 12b may not include the information of the operation schedule. In this case, the vector information in which information related to each component is arranged in a predetermined order is input to the schedule determination model 12b according to this example.

The information related to each component includes the number of days left until replacement, inspection, or the like determined by the manufacturer of each component or the like and the ratio (%) of the sensitivity of each component to a limit value. In addition, in this example, sensitivity is used as an index of a criterion for determining the deterioration of the performance of each component. However, information other than the sensitivity may be adopted. The ratio of the sensitivity of each component is the percentage expression of the ratio obtained by dividing a numerical value, such as the result of analysis measured using each component, or a numerical value (sensitivity) output by a sensor or the like which detects the degree of deterioration of each component by the limit value which is defined by the manufacturer of each component and at which replacement, inspection, or the like is determined to be required and is numerical information that can be used to determine whether or not the replacement, inspection, or the like of each component is required. In the example illustrated in FIG. 3, the state S of the input information includes 20 days left and a sensitivity ratio of 80% for the filter F11, 12 days left and a sensitivity ratio of 90% for the filter F12, ..., 45 days left and a sensitivity ratio of 20% for the pump 33. In addition, the above-mentioned information may be directly acquired from the analysis devices A1 to A3 by the information acquisition unit 11a or may be information obtained by performing predetermined calculation or the like on the basis of the acquired information.

Further, in this example, the information related to each component which is input to the schedule determination model 12b is an example, and the present disclosure is not limited thereto. As the information input to the schedule determination model 12b, various kinds of information that the management server 10 can acquire from the analysis devices A1 to A3 are adopted. For example, at least one of the warning information indicating an event leading to a failure of a component, the information related to the detection sensitivity or performance of the component, and the information related to the quality life limit of the component is adopted. Which information is adopted is determined in advance according to, for example, the structure, performance, or the like of the analysis devices A1 to A3 and the components of the analysis devices A1 to A3.

The operation schedule of each of the analysis devices A1 to A3 is represented as, for example, a bit string with a predetermined length (32 bits, 64 bits, or the like), and whether or not the analysis device is operated after 1 day, 2 days, 3 days, ... is stored as a binary value of 1 (operated) or 0 (non-operated) in sequence from the most significant bit (MSB). In the example illustrated in FIG. 3, the operation schedule indicating that the analysis device A1 will be operated after 1, 4, and 5 days, the analysis device A2 will be operated after 1, 3, 4, and 6 days, and the analysis device A3 will be operated after 3 and 4 days is input. However, the schedule determination model 12b may be configured to determine the maintenance schedule on the basis of the information related to the components, without receiving the input of the operation schedule.

The action A output by the schedule determination model 12b is a maintenance schedule for the replacement, inspection, or the like of each component of the analysis devices A1 to A3. For example, the maintenance schedule is represented as a bit string with a predetermined length (32 bits, 64 bits, or the like), and whether or not maintenance is performed after 1 day, 2 days, 3 days, ... is stored as a binary value of 1 (maintenance is performed) or 0 (maintenance is not performed) in sequence from the most significant bit (MSB). In the example illustrated in FIG. 3, the maintenance schedule indicating that maintenance is performed on the filters F11 and F12 after 3 days, ..., and maintenance is performed on the pump P33 after 5 days is output. Further, in a case in which it is determined that the maintenance of the component is not required, the schedule determination model 12b can output a maintenance schedule in which a value of 0 is stored in the entire bit string.

The maintenance schedule determination unit 11c of the management server 10 generates information (state S) to be input to the schedule determination model 12b on the basis of the information related to the analysis devices A1 to A3 acquired by the information acquisition unit 11a and the operation schedule of the analysis devices A1 to A3 acquired by the operation schedule acquisition unit 11b. The maintenance schedule determination unit 11c inputs the generated information to the schedule determination model 12b and acquires information (action A) output in response to the input. The information output by the schedule determination model 12b is the maintenance schedule of each component of the analysis devices A1 to A3. The maintenance schedule determination unit 11c determines the maintenance schedule of each of the analysis devices A1 to A3 on the basis of the acquired maintenance schedule of each component.

The schedule determination model 12b is a trained model that has been subjected to the reinforcement learning in advance so as to appropriately determine the maintenance schedule of the components of each of the analysis devices A1 to A3 on the basis of the information related to each component of the analysis devices A1 to A3 and the operation schedule of the analysis devices A1 to A3. For example, the schedule determination model 12b determines the maintenance schedule such that the input operation schedule is avoided and the maintenance is completed on the operation day. In addition, for example, the schedule determination model 12b determines the maintenance schedule such that the operating rate of the analysis devices A1 to A3 increases as much as possible. Further, for example, the schedule determination model 12b determines the maintenance schedule such that burdens, such as the number of maintenance operations, maintenance time, and maintenance cost of the analysis devices A1 to A3, are reduced as much as possible. Furthermore, for example, the schedule determination model 12b determines the maintenance schedule such that the frequency of occurrence of defects in the analysis devices A1 to A3 is reduced as much as possible.

Moreover, the schedule determination model 12b is a trained model that has been subjected to the reinforcement learning by the management server 10. The learning processing unit 11e of the management server 10 performs the reinforcement learning using learning data in which the reward R for the state S and the action A is set. For the reward R of the learning data, a high value is set for the excellent action A for the state S. In this embodiment, for the reward R of the learning data, a higher value is set for the more efficient maintenance schedule determined as the action A for the information related to the analysis devices A1 to A3 input as the state S, and a lower value is set for the less efficient maintenance schedule. Whether or not the maintenance schedule is efficient is determined on the basis of, for example, the operating rate of the analysis devices A1 to A3, the burden related to maintenance, or the frequency of occurrence of defects in the analysis devices. This determination may be performed by, for example, the designer of this system or may be performed by a device such as the management server 10.

The learning data that has been created in advance may be used, or the learning data may be created on the basis of the information accumulated by the management server 10. At least in an initial learning process, the learning data that has been created in advance is used. The learning data can be created on the basis of, for example, the result of a simulation using a simulator. In the second and subsequent learning processes (re-learning processes), it is preferable that the result of performing maintenance according to the maintenance schedule determined by the management server 10 is fed back and the learning data in which the reward R has been set on the basis of the feedback is used. In this case, the management server 10 includes a reward calculation unit that calculates the reward R according to the result of the maintenance. For example, the reward calculation unit collects information related to the operation results of the analysis devices A1 to A3 for a predetermined period after the maintenance of the analysis devices A1 to A3 is performed. The reward calculation unit collects information, such as the maintenance cost and time of the analysis devices A1 to A3, for a predetermined period, such as one month. The reward calculation unit determines the reward R of the learning data on the basis of the collected information such that a higher reward R is set for the maintenance schedule having higher execution efficiency or maintenance efficiency.

In this embodiment, the management server 10 calculates, for example, the operating rate of the analysis devices A1 to A3, the burden of maintenance (the number of maintenance operations, the maintenance time, the maintenance cost, and the like), or the frequency of occurrence of defects every month on the basis of the information accumulated from the analysis devices A1 to A3 and generates the learning data in which the reward R is set according to the calculation results. The learning data may be generated by the management server 10 or other means. In this embodiment, for example, the learning processing unit 11e of the management server 10 generates the learning data every month and performs reinforcement learning on the schedule determination model 12b using the generated learning data to update the schedule determination model 12b stored in the storage unit 12. At this time, the learning processing unit 11e generates the learning data such that a higher reward is given as the operating rate of the analysis devices A1 to A3 is higher, a higher reward is given in a case in which the burden of the maintenance burden of the analysis devices A1 to A3 is lower, and a higher reward is given as the frequency of occurrence of defects is higher.

For example, the management server 10 gives the highest reward R = 100 for an operation rate of 100% at which the analysis devices A1 to A3 can be operated without any problem for all of the operation schedules. In a case in which the analysis devices A1 to A3 are not operable for the operation schedule, the management server 10 can calculate the reward R by subtracting the reward R according to the ratio at which the analysis devices A1 to A3 are not operable. In addition, for example, the management server 10 can calculate the total time required for maintenance in one month, give the highest reward R = 100 in a case in which the total time does not exceed a threshold value, and calculate the reward R by subtracting the reward by 10 whenever the total time exceeds the threshold value by one hour. Further, for example, the management server 10 can calculate the total cost required for maintenance in one month, give the highest reward R = 100 in a case in which the maintenance cost does not exceed a threshold value, and calculate the reward R by subtracting the reward by 10 whenever the maintenance cost exceeds the threshold value by 100,000 yen. Furthermore, for example, the management server 10 can give the highest reward R = 100 in a case in which no defects occur and calculate the reward R by subtracting the reward by 10 whenever a defect occurs. In addition, these methods for calculating the reward R are examples, and the present disclosure is not limited thereto. The reward R may be calculated by various methods other than these methods. Further, the reward R may be calculated by a combination of the plurality of calculation methods.

The learning processing unit 11e determines the coefficients, threshold values, and the like of each of the neurons constituting the neural network of the schedule determination model 12b such that the reward R set for the state S and the action A of the learning data is maximized. For example, a DQN algorithm can be adopted for the reinforcement learning performed by the learning processing unit 11e.

In addition, in this embodiment, the schedule determination model 12b has been trained in advance by the reinforcement learning. However, the training method is not limited to the reinforcement learning. For example, the schedule determination model 12b may be trained by a learning method such as supervised learning using training data in which input values and output values are associated with each other or unsupervised learning without using training data. Even in a case in which the reinforcement learning is performed, the DQN method is adopted in this embodiment. However, the present disclosure is not limited thereto, and methods other than DQN may be adopted.

### <Information Display Process>

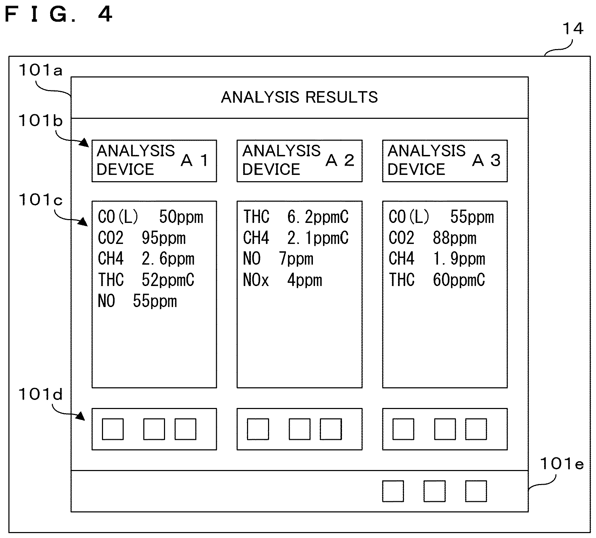

The management server 10 according to this embodiment can appropriately process the information acquired from the analysis devices A1 to A3 and display the processed information on the display unit 14. Hereinafter, some examples of display screens are illustrated. FIG. 4 is a schematic diagram illustrating an example of an analysis result display screen by the management server 10. The management server 10 can display the analysis results of the components included in the exhaust gas of the car acquired from the analysis devices A1 to A3 in real time during the execution of the test or after the test is completed. On the analysis result display screen according to this example, a title 101a of "Analysis results" indicating that this screen is the analysis result display screen is displayed in the uppermost portion, and labels 101b of three analysis devices A1 to A3 indicating the "analysis device A1", the "analysis device A2", and the "analysis device A3" are displayed below the title 101a so as to be arranged in the horizontal direction. Regions 101c in which the analysis results of the analysis devices A1 to A3 are displayed are provided below each label 101b. In each region 101c, sets of numerical values indicating the names and contents of the components included in the exhaust gas as the analysis results are displayed so as to be arranged in the vertical direction. Further, a region 101d in which icons for operating the analysis devices A1 to A3 are arranged is provided below the analysis result display region 101c. A region 101e in which icons for performing setting operations related to the analysis result display screen, a switching operation from this screen to another screen, or the like are arranged is provided in the lowest portion of the analysis result display screen. For example, the administrator who uses the management server 10 can check and verify the results of analysis performed by the analysis devices A1 to A3 on the basis of the analysis result display screen.

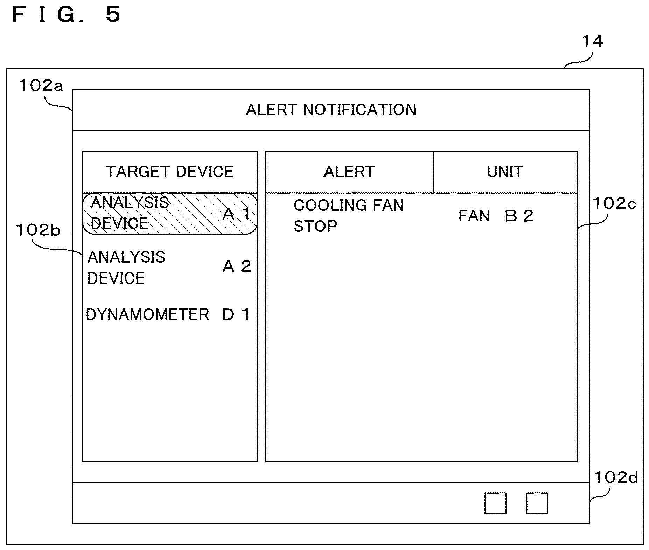

FIG. 5 is a schematic diagram illustrating an example of an alert notification screen by the management server 10. In a case in which the management server 10 acquires information related to failures, abnormalities, or the like from the analysis devices A1 to A3, the management server 10 notifies an alert through the display unit 14 in order to notify the administrator of the alert. A title 102a of "Alert notification" indicating that this screen is the alert notification screen is displayed in the uppermost portion of the alert notification screen according to this example. Below the title 102a, a selection region 102b for selecting a target device is provided on the right side, and an alert region 102c for displaying the content of the alert is provided on the left side. In the selection region 102b, a list of the names of the analysis devices A1 to A3 and the dynamometers D1 to D3 from which the management server 10 has acquired information related to failures, abnormalities, or the like is displayed. The administrator can select one target device whose alert content is to be checked from the list. In the example illustrated in FIG. 5, the analysis device A1 is selected, and the selected analysis device A1 is displayed so as to be highlighted.

Information of the alert related to the selected analysis device A1 is displayed in the alert region 102c. Labels "Alert" and "Unit" are attached to an upper portion of the alert region 102c. The content of the alert is displayed below the label "Alert", and the name of a unit (component) corresponding to the content of the alert is displayed below the label "Unit". In this example, "Cooling fan stop" is displayed as the content of the alert, and a "fan B2" is displayed as the corresponding unit. A region 102d in which icons for performing setting operations related to the alert notification screen, a switching operation from this screen to another screen, or the like are arranged is provided in the lowest portion of the alert notification screen. The administrator who uses the management server 10 can check whether or not failures, abnormalities, or the like occur in each of the analysis devices A1 to A3 and the content of the failures, the abnormalities, or the like on the basis of the alert notification screen.

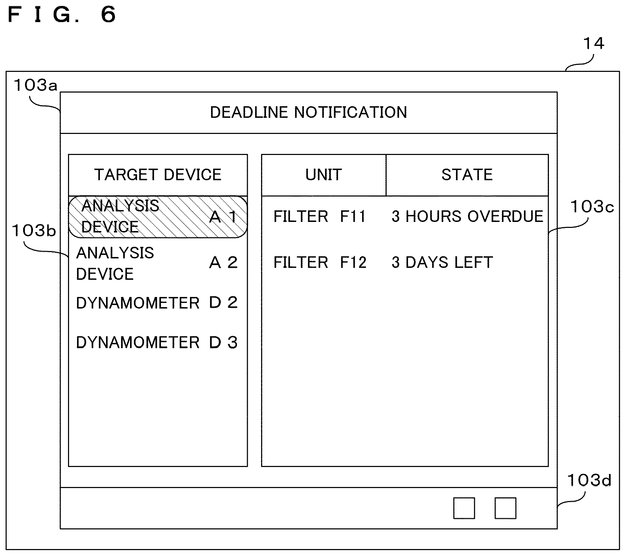

FIG. 6 is a schematic diagram illustrating an example of a deadline notification screen by the management server 10. The management server 10 notifies information related to a component, which has passed the deadline and requires replacement, inspection, or the like, among the components included in the analysis devices A1 to A3 on the basis of the information acquired from the analysis devices A1 to A3, using the deadline notification screen. A title 103a of "Deadline notification" indicating that this screen is the deadline notification screen is displayed in the uppermost portion of the deadline notification screen according to this example. Below the title 103a, a selection region 103b for selecting a target device is provided on the right side, and a notification region 103c in which information related to expiration is displayed is provided on the left side. A list of the names of the analysis devices A1 to A3 and the dynamometers D1 to D3 having the components that have passed the deadline is displayed in the selection region 103b, and the administrator can select one target device whose notification content is to be checked from the list. In the example illustrated in FIG. 6, the analysis device A1 is selected, and the selected analysis device A1 is displayed so as to be highlighted.

Information related to the deadline excess of the components of the selected analysis device A1 is displayed in the notification region 103c. Labels "Unit" and "State" are attached to an upper portion of the notification region 103c. The name of the unit (component) that has passed the deadline is displayed below the label "Unit", and the state of the deadline excess corresponding to the unit is displayed below the label "State". In this example, the "filter F11" is displayed as the unit, and the status indicates "3 hours overdue". In addition, in this example, the "filter F12" is displayed as the unit, and the state indicates that there are "3 days left" until the deadline. A region 103d in which icons for performing setting operations related to the deadline notification screen, a switching operation from this screen to another screen, or the like are arranged is provided in the lowest portion of the deadline notification screen. The administrator who uses the management server 10 can check, for example, whether or not there are any components of the analysis devices A1 to A3 that have passed the deadline for replacement, inspection or the like and to what extent the deadline has passed, on the basis of the deadline notification screen.

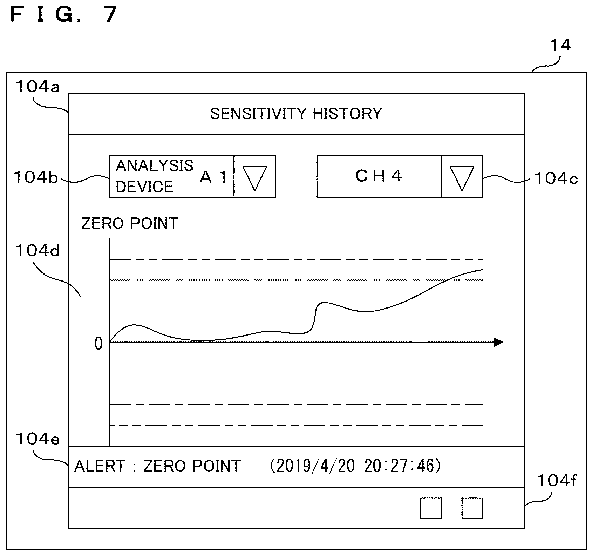

FIG. 7 is a schematic diagram illustrating an example of a sensitivity history screen by the management server 10. The management server 10 can display, for example, a change in the sensitivity of a zero point of the analysis unit as the analysis sensitivity of the exhaust gas of the analysis devices A1 to A3. A title 104a of "Sensitivity history" indicating that this screen is the sensitivity history screen is displayed in the uppermost portion of the sensitivity history screen according to this example. Below the title 104a, a pull-down menu 104b for selecting a target device is provided on the right side, and a pull-down menu 104c for selecting the gas to be analyzed is provided on the left side. In this example, a unit that analyzes CH4 of the analysis device A1 is selected.

A graph display region 104d is provided below the two pull-down menus 104b and 104c. A graph in which the horizontal axis is time and the vertical axis is the amount of deviation from the zero point is displayed in the graph display region 104d. In this graph, a first threshold value represented by a one-dot chain line and a second threshold value represented by a two-dot chain line are displayed. For example, in a case in which the amount of deviation from the zero point exceeds the first threshold value, an alert prompting maintenance is displayed. In a case in which the amount of deviation exceeds the second threshold value, analysis is prohibited. An alert display region 104e is provided below the graph display region 104d, and a message is displayed, for example, in a case in which the amount of deviation from the zero point exceeds the first threshold value or the second threshold value. A region 104f in which icons for performing setting operations related to the sensitivity history screen, a switching operation from this screen to another screen, or the like are arranged is provided in the lowest portion of the sensitivity history screen. The administrator who uses the management server 10 can check whether or not the sensitivity of each of the analysis devices A1 to A3 is reduced on the basis of the sensitivity history screen.

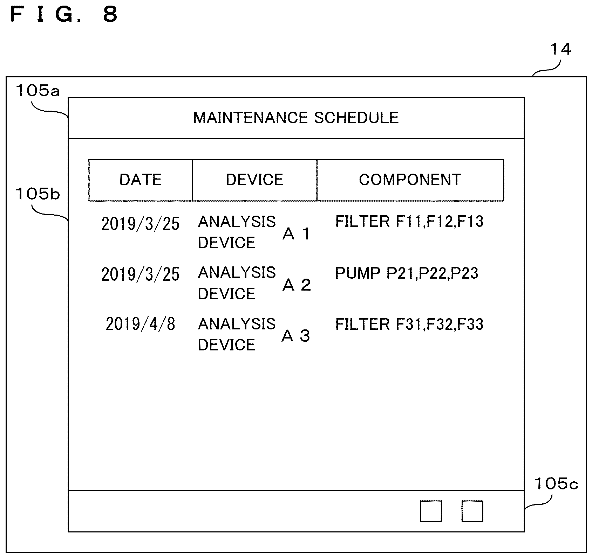

FIG. 8 is a schematic diagram illustrating an example of a maintenance schedule display screen by the management server 10. The management server 10 displays the maintenance schedule of the analysis devices A1 to A3 determined by the maintenance schedule determination unit 11c using the schedule determination model 12b on the maintenance schedule display screen. A title 105a of "Maintenance schedule" indicating that this screen is the maintenance schedule display screen is displayed in the uppermost portion of the maintenance schedule display screen according to this example. A maintenance schedule display region 105b is provided below the title 105a.

Labels "Date", "Device", and "Component" are displayed so as to be arranged in the horizontal direction in an upper portion of the maintenance schedule display region 105b. A list of the maintenance schedules of the analysis devices A1 to A3 is displayed below the three labels. In addition, the maintenance schedules displayed on this screen are maintenance schedules recommended by the management server 10, and the administrator determines whether or not to perform maintenance according to the schedules. In this example, the maintenance of the filters F11, F12, and F13 of the analysis device A1 is recommended on March 25, 2019, and the maintenance of the pumps P21, P22, and P23 of the analysis device A2 is recommended on the same date. In addition, the maintenance of the filters F31, F32, and F33 of the analysis device A3 is recommended on April 8, 2019. A region 105c in which icons for performing setting operations related to the maintenance schedule display screen, a switching operation from this screen to another screen, or the like are arranged is provided in the lowest portion of the maintenance schedule display screen. The administrator who uses the management server 10 can examine the maintenance schedule of each of the analysis devices A1 to A3 on the basis of the maintenance schedule display screen.

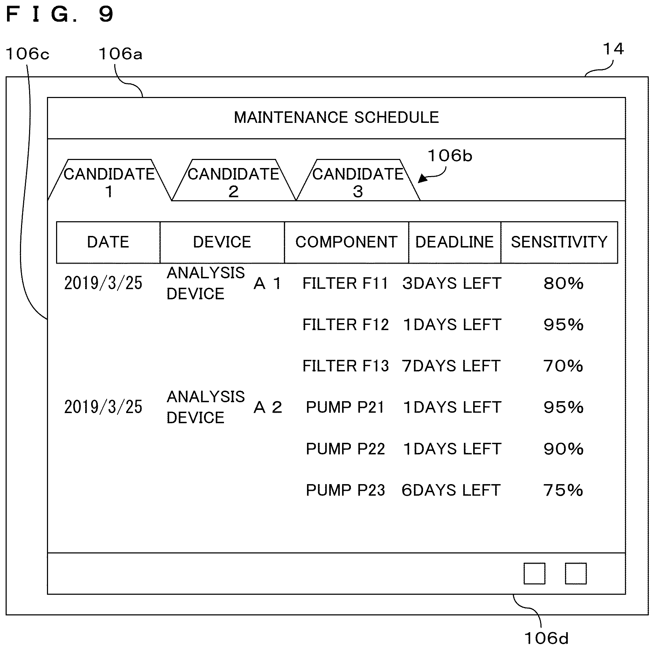

FIG. 9 is a schematic diagram illustrating another example of the maintenance schedule display screen by the management server 10. The management server 10 may display the maintenance schedule display screen illustrated in FIG. 9 on the display unit 14 instead of the maintenance schedule display screen illustrated in FIG. 8. A title 106a of "Maintenance schedule" indicating that this screen is the maintenance schedule display screen is displayed in the uppermost portion of the maintenance schedule display screen illustrated in FIG. 9. Tabs 106b for switching and displaying a plurality of maintenance schedule candidates are provided below the title 106a. In this example, it is assumed that the schedule determination model 12b of the management server 10 can output a plurality of candidates for the maintenance schedules of the analysis devices A1 to A3. The management server 10 extracts three candidates from the plurality of maintenance schedules output by the schedule determination model 12b according to, for example, the magnitude of an evaluation value and displays the maintenance schedules in association with the tabs "Candidate 1", "Candidate 2", and "Candidate 3". The administrator can select one of the tabs 106b to check the corresponding maintenance schedule.

On the maintenance schedule display screen, a maintenance schedule display region 106c is provided below the tabs 106b. The maintenance schedule candidate selected by the tab 106b is displayed in the maintenance schedule display region 106c. In addition, labels, such as "Date", "Device", "Component", "Deadline", and "Sensitivity", are displayed so as to be arranged in the horizontal direction in an upper portion of the maintenance schedule display region 106c. A list of the maintenance schedules of the analysis devices A1 to A3 is displayed below the five labels. The "Date", the "Device", and the "Components" are the same as those in the maintenance schedule display screen illustrated in FIG. 8. However, on the maintenance schedule display screen illustrated in FIG. 9, the information of the "Deadline" and the "Sensitivity" is individually displayed for each component. For the label "Deadline", the information of the number of days left until the component deadline is displayed for the determined maintenance date. For the label "Sensitivity", the information of the ratio (%) of the sensitivity of the component to the limit value is displayed. This information is calculated on the basis of the sensitivity predicted for the maintenance date.

In this example, the maintenance of the filters F11, F12, and F13 of the analysis device A1 is recommended on March 25, 2019. The deadline for the filter F11 on March 25 that is the maintenance date is 3 days left, and the sensitivity is projected to reach 80%. The deadline for the filter F12 is one day left, and the sensitivity is predicted to reach 95%. The deadline for the filter F13 is 7 days left, and the sensitivity is predicted to reach 70%. Further, in this example, the maintenance of the pumps P21, P22, and P23 of the analysis device A2 is recommended on March 25, 2019. The deadline for the Pump P21 on March 25 that is the maintenance date is one day left, and the sensitivity is projected to reach 95%. Furthermore, the deadline for the pump P22 is one day left, and the sensitivity is predicted to reach 90%. The deadline for the Pump P23 is 6 days left, and the sensitivity is projected to reach 75%.

A region 106d in which icons for performing setting operations related to the maintenance schedule display screen, a switching operation from this screen to another screen, or the like are arranged is provided in the lowest portion of the maintenance schedule display screen. The administrator who uses the management server 10 can perform a selection operation on the tabs 106b to switch and display a plurality of maintenance schedule candidates and can examine the maintenance schedule of each of the analysis devices A1 to A3.

In addition, the display of the screens illustrated in FIGS. 4 to 9 is an example, and the present disclosure is not limited thereto. The management server 10 may display various screens for notifying various kinds of information on the display unit 14 in addition to the screens given as examples.

### <Flowchart>

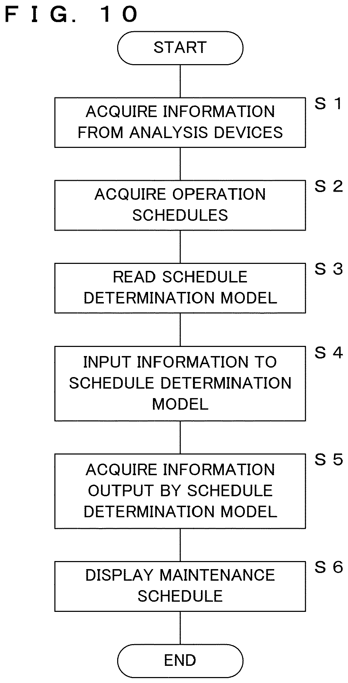

FIG. 10 is a flowchart illustrating the procedure of the maintenance schedule determination process performed by the management server 10 according to this embodiment. The information acquisition unit 11a of the processing unit 11 of the management server 10 according to this embodiment communicates with the analysis devices A1 to A3 using the communication unit 13 to acquire predetermined information related to the components of the analysis devices A1 to A3 (Step S1). The information acquired at this time is information that can be used to determine the maintenance deadline of each component and can be, for example, information indicating the deadline for the replacement of the component, the sensitivity or the degree of deterioration of the component, or the like.

In addition, the operation schedule acquisition unit 11b of the processing unit 11 acquires the information of the operation schedules defined for the analysis devices A1 to A3 (Step S2). At this time, the operation schedule acquisition unit 11b may read the data of the operation schedule input in advance to acquire the operation schedule or may acquire the operation schedule input from the administrator through the input unit 15. However, the management server 10 may not perform the determination of the maintenance schedule considering the operation schedule. In this case, the acquisition of the operation schedule in Step S2 of this flowchart may not be performed. The acquisition of the operation schedule and the determination of the maintenance schedule considering the operation schedule may not be essential processes performed by the management server 10, but may be optional processes.

Then, the maintenance schedule determination unit 11c of the processing unit 11 reads the schedule determination model 12b stored in the storage unit 12 (Step S3). The maintenance schedule determination unit 11c generates information to be input to the schedule determination model 12b on the basis of the information acquired in Step S1 and the operation schedule acquired in Step S2 and inputs the generated information to the schedule determination model 12b (Step S4). At this time, the maintenance schedule determination unit 11c generates the input information in the format illustrated as the state S in FIG. 3 on the basis of the acquired information and operation schedule.

Then, the maintenance schedule determination unit 11c acquires the information output by the schedule determination model 12b (Step S5). Here, the information output by the schedule determination model 12b is information in the format illustrated as the action A in FIG. 3 and indicates the maintenance schedule of the components of the analysis devices A1 to A3. The display processing unit 11d of the processing unit 11 displays the maintenance schedule acquired in Step S5 on the display unit 14, for example, in the display aspect illustrated in FIG. 8 (Step S6). Then, the process ends.

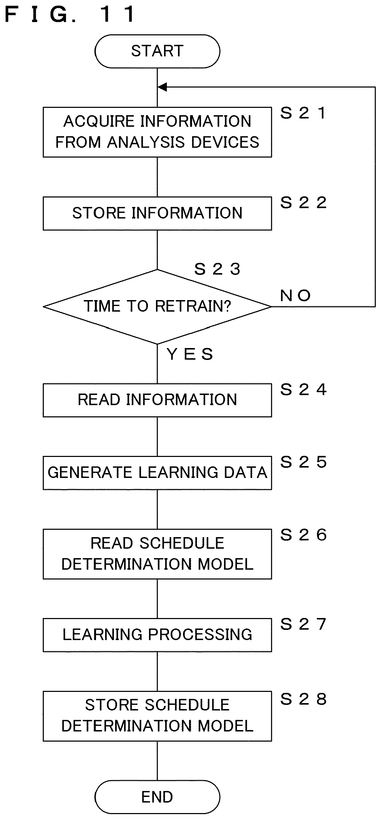

FIG. 11 is a flowchart illustrating the procedure of a process of training the schedule determination model 12b performed by the management server 10 according to this embodiment. The information acquisition unit 11a of the processing unit 11 in the management server 10 according to this embodiment periodically acquires information from the analysis devices A1 to A3 (Step S21). The information acquisition unit 11a stores the acquired information in the storage unit 12 (Step S22). The management server 10 retrains the schedule determination model 12b at a predetermined timing of, for example, once a month. The processing unit 11 determines whether or not it is time to retrain the schedule determination model 12b (Step S23). In a case in which it is not time to perform the retraining (S23: NO), the processing unit 11 returns the process to Step S21 and repeatedly acquires and stores the information of the analysis devices A1 to A3.

In a case in which it is time to retrain the schedule determination model (S23: YES), the learning processing unit 11e of the processing unit 11 reads the information related to the analysis devices A1 to A3 stored and accumulated in the storage unit 12 after the execution of the previous learning process (Step S24). The learning processing unit 11e determines the reward R for the state S and the action A on the basis of the information read in Step S24 and generates learning data which is a set of those (Step S25). The learning processing unit 11e reads the schedule determination model 12b stored in the storage unit 12 (Step S26). The learning processing unit 11e performs a reinforcement learning process on the schedule determination model 12b read in Step S26 using the learning data generated in Step S25 (Step S27). The learning processing unit 11e stores the schedule determination model 12b that has been subjected to the reinforcement learning in the storage unit 12 (Step S28). Then, the process ends.

### <Summary>

In the management system for the analysis device according to this embodiment having the above-mentioned configuration, the management server 10 determines the maintenance schedule of various components of the analysis devices A1 to A3 that analyze a vehicle, such as a car, or a specimen which is a portion of the vehicle, using the schedule determination model 12b trained in advance. The schedule determination model 12b is a trained model that has been trained in advance so as to receive information related to the components of the analysis devices A1 to A3 as an input and to output the maintenance schedule of the components. In addition, the schedule determination model 12b has been trained in advance such that a large amount of reward related to the maintenance schedule can be obtained. The management server 10 can acquire the information related to the components from the analysis devices A1 to A3 and input the acquired information to the schedule determination model 12b to determine the maintenance schedule of the components. The efficient maintenance of the analysis devices A1 to A3 can be expected by determining the maintenance schedule using the schedule determination model 12b that has been appropriately trained by the reinforcement learning or the like.

Further, in this embodiment, for example, the management server 10 acquires, as the information related to the components of the analysis devices A1 to A3, at least one of the warning information indicating an event leading to a failure, the information related to the sensitivity or performance of the components, and the information related to the life limit of the components. This makes it possible to accurately determine whether or not the maintenance of the components of the analysis devices A1 to A3 is required.

Furthermore, in this embodiment, the schedule determination model 12b receives information related to the components of the plurality of analysis devices A1 to A3 as an input and outputs the maintenance schedule of the components of the plurality of analysis devices A1 to A3. The management server 10 can determine the maintenance schedule for the components of the plurality of analysis devices A1 to A3 by acquiring information from each of the plurality of analysis devices A1 to A3 and inputting the information to the schedule determination model 12b.

Moreover, in this embodiment, the reinforcement learning that gives a high reward in a case in which the operating rate of the analysis devices A1 to A3 is high is performed to generate the schedule determination model 12b for determining the maintenance schedule. Therefore, the maintenance schedule is determined such that the operating rate of the analysis devices A1 to A3 is high, and it is possible to achieve efficient maintenance.

In addition, in this embodiment, the reinforcement learning that gives a high reward in a case in which the burden (for example, the number of maintenance operation, the maintenance time, or the maintenance cost) related to the maintenance of the analysis device is low is performed to generate the schedule determination model 12b that determines the maintenance schedule. Therefore, the maintenance schedule is determined such that the burden related to the maintenance of the analysis devices A1 to A3 is reduced, and it is possible to achieve efficient maintenance.

Further, in this embodiment, the reinforcement learning that gives a high reward in a case in which the frequency of occurrence of defects in the analysis devices A1 to A3 is low is performed to generate the schedule determination model 12b that determines the maintenance schedule. Therefore, the maintenance schedule is determined so as to suppress the occurrence of defects in the analysis devices A1 to A3, and it is possible to efficiently use the analysis devices A1 to A3.

Furthermore, in this embodiment, the schedule determination model 12b further receives the operation schedule of the analysis devices A1 to A3 as an input and determines the maintenance schedule corresponding to the operation schedule. Therefore, for example, the schedule determination model 12b can determine the maintenance schedule while avoiding the period for which the analysis devices A1 to A3 need to be operated, and it is possible to achieve the efficient maintenance of the analysis devices A1 to A3.

Moreover, in this embodiment, the reinforcement learning that gives a reward corresponding to the operating rate of the analysis devices A1 to A3, the burden related to the maintenance of the analysis devices A1 to A3, the frequency of occurrence of defects in the analysis devices A1 to A3, or the like is performed on the learning model, which receives information related to the components of the analysis devices A1 to A3 as an input and outputs the maintenance schedule of the components, to generate the trained schedule determination model 12b. Therefore, the schedule determination model 12b can determine the maintenance schedule considering the operating rate of the analysis devices A1 to A3, the burden related to maintenance, the frequency of occurrence of defects in the analysis devices A1 to A3, or the like, and it is possible to achieve efficient maintenance.

In addition, in this embodiment, the analysis devices to be managed by the management server 10 are three analysis devices A1 to A3. However, the present disclosure is not limited thereto. For example, the number of analysis devices to be managed may be two or less or four or more. Further, the display of the screens illustrated in FIGS. 4 to 9 is an example, and the present disclosure is not limited thereto. The management server 10 may perform any screen display. Furthermore, the filters and the pumps are given as an example of the components of the analysis devices A1 to A3. However, any components other than these components may be used. The maintenance of the components of the analysis devices A1 to A3 is not limited to replacement, and may include operations such as adjustment and calibration.

### <Embodiment 2>

A management server 10 according to Embodiment 2 does not determine the schedule using the schedule determination model 12b, but determines the schedule according to a predetermined rule. The management server 10 according to Embodiment 2 does not include the schedule determination model 12b of the storage unit 12 and the learning processing unit 11e of the processing unit 11 in the block diagram illustrated in FIG. 2. Hereinafter, a method for determining the maintenance schedule by the maintenance schedule determination unit 11c of the management server 10 according to Embodiment 2 will be described.

The maintenance schedule determination unit 11c of the management server 10 according to Embodiment 2 determines the maintenance deadline for each component of the analysis devices A1 to A3 on the basis of the information related to the analysis devices A1 to A3 acquired by the information acquisition unit 11a. At this time, for example, in a case in which the upper limit of the usage time is set for the component, the maintenance schedule determination unit 11c can acquire information of the usage time of the component and compare the information with the upper limit to determine the maintenance deadline. Further, for example, in a case in which maintenance is performed according to the deterioration of the performance of the component or the like, the maintenance schedule determination unit 11c can acquire information of sensitivity indicating the performance of the component or the like and compares the information with a threshold value, which is a criterion for determining performance deterioration, to determine the maintenance deadline. Furthermore, these methods for determining the maintenance deadline are examples, and the present disclosure is not limited thereto.

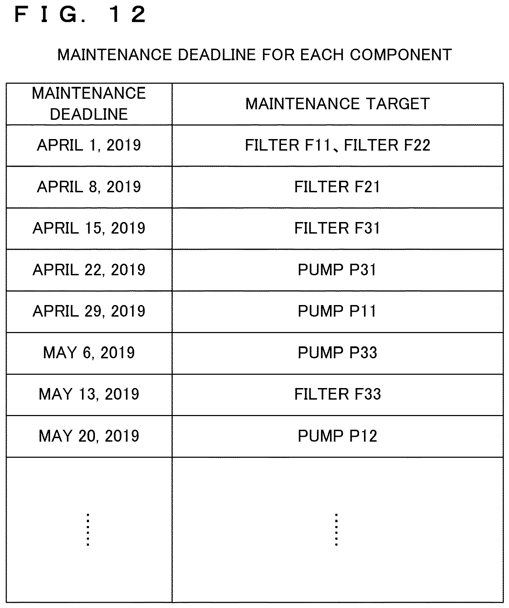

FIG. 12 is a schematic diagram illustrating an example of the maintenance deadline for each component. In the example illustrated in FIG. 12, the maintenance deadline for the filter F11 of the analysis device A1 and the filter F22 of the analysis device A2 is determined to be April 1, 2019. In addition, the maintenance deadline for the filter F21 of the analysis device A2 is determined to be April 8, 2019, and the maintenance deadline for the filter F31 of the analysis device A3 is determined to be April 15, 2019. The maintenance deadline for the pump P31 of the analysis device A3 is determined to be April 22, 2019, the maintenance deadline for the pump P11 of the analysis device A1 is determined to be April 29, 2019, and the maintenance deadline for the pump P33 of the analysis device A3 is determined to be May 6, 2019. The maintenance deadline for the filter F33 of the analysis device A3 is determined to be May 13, 2019, and the maintenance deadline for the pump P12 of the analysis device A1 is determined to be May 20, 2019.

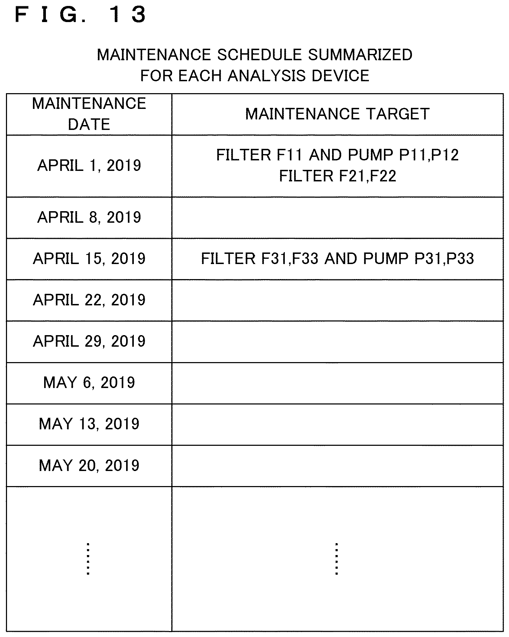

Then, the maintenance schedule determination unit 11c summarizes the maintenance dates for the components having a maintenance deadline difference within a predetermined period (for example, 2 months) on the basis of the components having the earliest maintenance deadline such that the maintenance dates are the same for each of the analysis devices A1 to A3. FIG. 13 is a schematic diagram illustrating an example of the maintenance schedule summarized for each analysis device and illustrates an example in which the maintenance schedule of each of the analysis devices A1 to A3 is determined on the basis of the maintenance deadlines illustrated in FIG. 12. According to FIG. 12, since the filter F11 has the earliest maintenance deadline among the components of the analysis device A1, the maintenance schedule determination unit 11c determines the maintenance date of the filter F11 and the pumps P11 and P12 of the analysis device A1 to be April 1, 2019 such that the maintenance of the pumps P11 and P12, which are the components whose maintenance deadlines are within 2 months from April 1, 2019 that is the maintenance deadline of the filter F11, is performed on the same date as the maintenance of the filter F11.

Similarly, since the filter F22 has the earliest maintenance deadline among the components of the analysis device A2, the maintenance schedule determination unit 11c determines the maintenance date of the filters F21 and F22 of the analysis device A2 to be April 1, 2019 such that the maintenance of the filter F21, which is the component whose maintenance deadline is within 2 months from April 1, 2019 that is the maintenance date of the filter F22, is performed on the same date as the maintenance of the filter F22. Similarly, since the filter F31 has the earliest maintenance deadline among the components of the analysis device A3, the maintenance schedule determination unit 11c determines the maintenance date of the filters F31 and F33 and the pumps P31 and P33 of the analysis device A3 to be April 15, 2019 such that the maintenance of the filter F33 and the pumps P31 and P33, which are the components whose maintenance deadlines are within 2 months from April 15, 2019 that is the maintenance date of the filter F31, is performed on the same date as the maintenance of the filter F31.

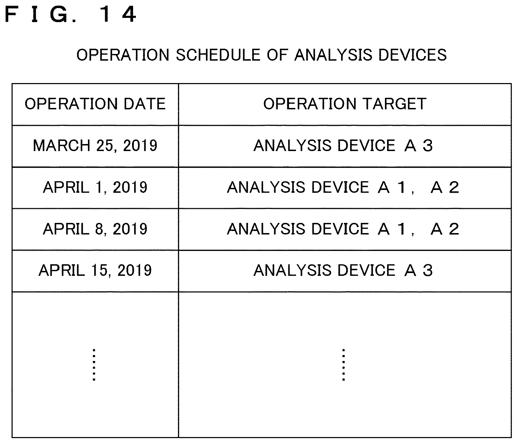

Then, the maintenance schedule determination unit 11c adjusts the maintenance schedule on the basis of the operation schedule of the analysis devices A1 to A3 acquired by the operation schedule acquisition unit 11b. FIG. 14 is a schematic diagram illustrating an example of the operation schedule of the analysis devices A1 to A3. In this example, the schedule is determined such that the analysis device A3 is operated on March 25, 2019, the analysis devices A1 and A2 are operated on April 1, 2019, and the analysis devices A1 and A2 are operated on April 8, 2019, and the analysis device A3 is operated on April 15, 2019.

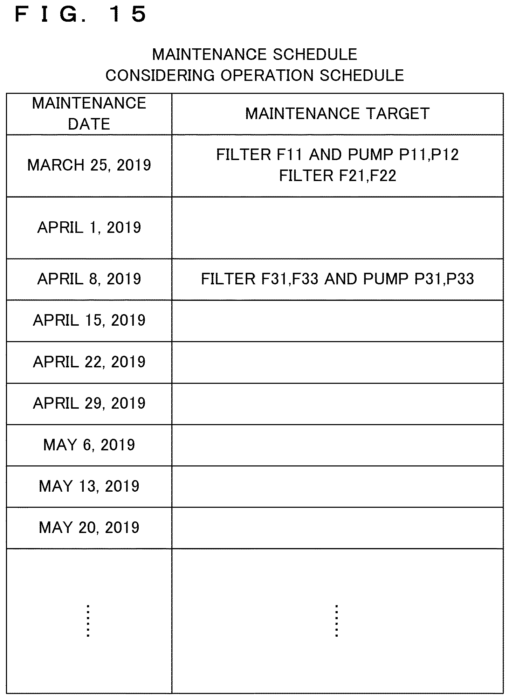

FIG. 15 is a schematic diagram illustrating an example of the maintenance schedule considering the operation schedule. Since the analysis devices A1 and A2 need to be operated on April 1, 2019, the maintenance schedule determination unit 11c changes the maintenance of the analysis devices A1 and A2 on April 1, 2019 to March 25, 2019 before this date. Similarly, since the analysis device A3 needs to be operated on April 15, 2019, the maintenance schedule determination unit 11c changes the maintenance of the analysis device A3 on April 15, 2019 to April 8, 2019 before this date. In addition, in this example, for the maintenance that overlaps the operation schedule, one week before the maintenance date is set as a new maintenance date with a margin. However, for example, one day before the maintenance date may be set as a new maintenance date.

Further, the management server 10 according to Embodiment 2 may not adjust the maintenance schedule considering the operation schedule. In this case, the maintenance schedule illustrated in FIG. 13 is displayed as the maintenance schedule determined by the management server 10.

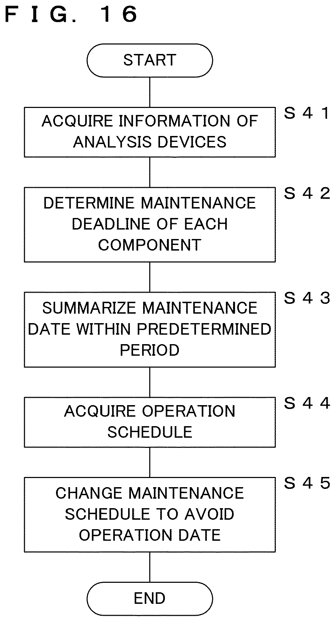

FIG. 16 is a flowchart illustrating the procedure of the maintenance schedule determination process performed by the management server 10 according to Embodiment 2. The information acquisition unit 11a of the processing unit 11 in the management server 10 according to Embodiment 2 communicates with the analysis devices A1 to A3 using the communication unit 13 to acquire predetermined information related to the components of the analysis devices A1 to A3 (Step S41). The information acquired at this time is information that can be used to determine the maintenance deadline of each component and can be, for example, information indicating the deadline for the replacement of the component, the sensitivity or the degree of deterioration of the component, or the like. The maintenance schedule determination unit 11c of the processing unit 11 determines the maintenance deadline of each component of the analysis devices A1 to A3 on the basis of the acquired various kinds of information (Step S42). The maintenance schedule determination unit 11c summarizes the maintenance dates for a plurality of components having a maintenance deadline difference within a predetermined period for each of the analysis devices A1 to A3 on the basis of the components having the earliest maintenance deadline (Step S43).

Then, the operation schedule acquisition unit 11b of the processing unit 11 acquires information of the operation schedule determined for the analysis devices A1 to A3 (Step S44). The maintenance schedule determination unit 11c changes the maintenance schedule of the analysis devices A1 to A3 so as to avoid the operation date of the analysis devices A1 to A3 on the basis of the acquired operation schedule (Step S45). Then, the process ends. In addition, the management server 10 may not perform the process of acquiring the information of the operation schedule in Step S44 and the process of changing the maintenance schedule on the basis of the operation schedule in Step S45 in this flowchart. In this case, the management server 10 may end the maintenance schedule determination process after ending the process in Step S43 and output the maintenance schedule summarizing the maintenance dates of a plurality of components as the process result in Step S43. The determination of the maintenance schedule by the management server 10 considering the operation schedule in Embodiment 2 is an optional process.

The management server 10 according to Embodiment 2 having the above-mentioned configuration acquires information related to a plurality of components from a plurality of analysis devices A1 to A3 that perform analysis related to cars and determines the maintenance deadline of each component. The management server 10 determines the maintenance schedule of each of the analysis devices A1 to A3 on the basis of the determined maintenance deadline of each component. Therefore, the management server 10 can determine the maintenance schedule of the plurality of analysis devices A1 to A3 in consideration of the maintenance deadlines of the plurality of components of the analysis devices A1 to A3, and the efficient maintenance of the plurality of analysis devices A1 to A3 can be expected.

In addition, the management server 10 according to Embodiment 2 acquires the operation schedule of the analysis devices A1 to A3 and determines the maintenance schedule of the analysis devices A1 to A3 so as to avoid the operation dates of the analysis devices A1 to A3. Therefore, maintenance can be performed for the period for which the analysis devices A1 to A3 are not operated, and it is possible to reliably operate the analysis devices A1 to A3 for the period for which the analysis devices A1 to A3 need to be operated.

Further, in Embodiment 2, the maintenance schedules, the operation schedules, and the like illustrated in FIGS. 12 to 15 are examples, and the present disclosure is not limited thereto. Furthermore, the management server 10 according to Embodiment 2 summarizes the maintenance schedules for each of the analysis devices A1 to A3. However, the present disclosure is not limited thereto. For example, the management server 10 may summarize the maintenance schedules for each of the buildings 1 to 3.

Moreover, since the other configurations of the management system according to Embodiment 2 are the same as those of the management system according to Embodiment 1, the same components are denoted by the same reference numerals, and the detailed description thereof will not be repeated.

### <Embodiment 3>

A management system according to Embodiment 3 transmits information related to the maintenance schedule determined by the management server 10 to a terminal device of a predetermined administrator to notify the administrator of the information. The terminal device may be various information processing devices, such as a smart phone, a tablet terminal device, and a personal computer (PC). The management server 10 can notify information to a portable terminal device using wireless communication such as a mobile telephone communication network or a wireless local area network (LAN).

The management server 10 stores, for example, the identification information of the terminal device of the administrator that is a notification destination or information, such as the e-mail address or telephone number of the administrator, in the database. The notification destination may be one person or a plurality of persons. Further, the notification destination may be different for each analysis device or each building. After determining the schedule, the management server 10 transmits information related to the determined maintenance schedule to the notification destination registered in the database to notify the administrator or the like of the information.

Furthermore, for example, in a case in which an abnormality in the analysis device is detected or in a case in which the replacement time of the component of the analysis device is approaching, the management server 10 may notify that to the terminal device of the administrator or the like, in addition to the maintenance schedule.

Since the other configurations of the management system according to Embodiment 3 are the same as those of the management system according to Embodiment 1, the same components are denoted by the same reference numerals, and the detailed description thereof will not be repeated.

### <Embodiment 4>

In Embodiments 1 to 3, the management system that manages the maintenance schedule of the analysis devices has been described. However, the objects to be managed by the management system may include not only the analysis devices but also various peripheral devices that are used together with the analysis devices and various related devices that support analysis by the analysis devices.

A management system for a vehicle test facility according to Embodiment 4 manages a maintenance schedule of an analysis system including analysis devices and vehicle test facilities (related device), such as an automatic driving device and a dynamometer, which are used together with the analysis devices. There may be a plurality of analysis systems to be managed. A management server 10 according to Embodiment 4 acquires information related to components from the analysis devices included in the analysis system and also acquires information relates to components from the vehicle test facilities such as the automatic driving device and the dynamometer. The management server 10 acquires, as the information related to the components, warning information indicating an event leading to a failure of the component, information related to the detection sensitivity or performance of the component, or information related to the quality life limit of the component from the vehicle test facilities such as the automatic driving device and the dynamometer. In addition, the management server 10 acquires information that can be used to determine the maintenance deadline for, for example, the components that need to be replaced regularly from the vehicle test facilities such as the automatic driving device and the dynamometer.

The management server 10 can determine, for example, whether or not an abnormality occurs in the analysis system including the vehicle test facilities, such as the automatic driving device and the dynamometer, and when to replace the components of these devices included in the analysis system, on the basis of the acquired information. The management server 10 can perform notification related to the vehicle test facilities, such as the automatic driving device and the dynamometer, for example, on the alert notification screen illustrated in FIG. 5 or the deadline notification screen illustrated in FIG. 6.

In addition, the management server 10 according to Embodiment 4 determines the maintenance schedule of the analysis system including the analysis devices and the vehicle test facilities, such as the automatic driving device and the dynamometer, on the basis of the acquired information. The management server 10 determines the maintenance schedule such that burdens, such as the number of maintenance operations, maintenance time, and maintenance cost of the analysis system, are reduced as much as possible or that the frequency of occurrence of defects in the analysis system is reduced as much as possible, in order to increase, for example, the operating rate of the analysis system as much as possible. Either the method using the schedule determination model 12b described in Embodiment 1 or the method for determining the schedule according to the predetermined rule described in Embodiment 2 may be adopted as the maintenance schedule determination method by the management server 10.

The management server 10 displays the determined maintenance schedule of the analysis system on, for example, the maintenance schedule display screen illustrated in FIG. 8 or FIG. 9. The management server 10 displays the maintenance schedule of the analysis devices, the maintenance schedule of the automatic driving device, the maintenance schedule of the dynamometer, and the like on the maintenance schedule display screen.

Since the other configurations of the management system according to Embodiment 4 are the same as those of the management system according to Embodiment 1, the same components are denoted by the same reference numerals, and the detailed description thereof will not be repeated.

The embodiments according to the present disclosure are examples in all respects and need to be considered as not restrictive. The scope of the present disclosure is not indicated by the above-mentioned meaning, but is indicated by the scope of the claims. The scope of the present disclosure is intended to include all modifications within the meaning and scope equivalent to the scope of the claims.

### [Description of Reference Numerals]

- 1 to 3: Building
- 10: Management server
- 11: Processing unit
- 11a: Information acquisition unit (acquisition unit)
- 11b: Operation schedule acquisition unit
- 11c: Maintenance schedule determination unit (determination unit)
- 11d: Display processing unit
- 11e: Learning processing unit
- 12: Storage unit
- 12a: Server program (computer program)
- 12b: Schedule determination model (trained model)
- 13: Communication unit
- 14: Display unit
- 15: Input unit
- 99: Recording medium
- A1 to A3: Analysis device
- F11 to F13, F21 to F23, F31 to F33: Filter (component)
- P11 to P13, P21 to P23, P31 to P33: Pump (component)

## Claims

1. A management system comprising:
an acquisition unit that acquires, as information related to a plurality of components of devices included in each of a plurality of analysis systems each of which includes an analysis device analyzing a performance of a vehicle or a specimen which is a portion of the vehicle and a related device supporting analysis by the analysis device, at least one of warning information indicating an event leading to a failure of the component, information related to a sensitivity or performance of the component, and information related to a life limit of the component from the plurality of analysis systems; and
a determination unit that determines a maintenance schedule of the analysis system on the basis of the information acquired by the acquisition unit.

2. The management system according to claim 1,
wherein the determination unit uses a trained model that has been trained so as to output an efficient maintenance schedule in response to an input of information related to the components of the devices included in the analysis system and inputs the information acquired by the acquisition unit to the trained model to determine the maintenance schedule of the analysis system.

3. The management system according to claim 2,
wherein the determination unit determines the maintenance schedule such that an execution efficiency of the analysis by the analysis system or a maintenance efficiency of the analysis system is high.

4. The management system according to claim 2 or 3,
wherein the trained model is a model that has been subjected to reinforcement learning such that a high reward related to the maintenance schedule is obtained.

5. The management system according to any one of claims 2 to 4,
wherein the trained model is a model that has been trained by reinforcement learning which gives a high reward in a case in which an operating rate of the analysis system is high.

6. The management system according to any one of claims 2 to 5, wherein the trained model is a model that has been trained by reinforcement learning which gives a high reward in a case in which a burden related to a maintenance of the analysis system is low.

7. The management system according to any one of claims 2 to 6, wherein the trained model is a model that has been trained by reinforcement learning which gives a high reward in a case in which a frequency of occurrence of a defect in the analysis system is low.

8. The management system according to any one of claims 2 to 7,
wherein the trained model outputs a maintenance schedule of a plurality of analysis devices in response to the input of the information related to the components of the plurality of analysis systems,
the acquisition unit acquires the information related to the components from the plurality of analysis systems, and
the determination unit inputs the information related to the components of the devices included in the plurality of analysis systems acquired by the acquisition unit to the trained model to determine the maintenance schedule of the plurality of analysis systems.

9. The management system according to any one of claims 2 to 8, further comprising:
an operation schedule acquisition unit that acquires an operation schedule of the analysis system,
wherein the trained model outputs the maintenance schedule in response to the input of the information related to the components of the devices included in the analysis system and the operation schedule of the analysis system.

10. The management system according to any one of claims 2 to 9,
wherein the related device of the analysis system include a dynamometer that absorbs torque generated by the vehicle or the specimen, and
the analysis device analyzes gas emitted from the vehicle or the specimen.

11. The management system according to claim 1,
wherein the acquisition unit acquires information from the plurality of analysis systems, and
the determination unit includes a first determination unit that determines a maintenance deadline of each of the components on the basis of the information acquired by the acquisition unit and a second determination unit that determines a maintenance schedule, in which a maintenance date of a component having a late maintenance deadline has been set to a maintenance date of a component having an early maintenance deadline, for each of the analysis systems on the basis of the deadline determined by the first determination unit.

12. The management system according to claim 11,
wherein the second determination unit determines a maintenance schedule in which the maintenance dates of a plurality of components whose maintenance deadlines determined by the first determination unit are within a predetermined period have been set to the same date.

13. The management system according to claim 11 or 12, further comprising:
an operation schedule acquisition unit that acquires an operation schedule of the analysis system,
wherein the second determination unit determines the maintenance schedule of the analysis system, avoiding a period for which the analysis system is operated, on the basis of the operation schedule acquired by the operation schedule acquisition unit.

14. The management system according to any one of claims 1 to 13, further comprising:
a notification unit that notifies a predetermined terminal device of the maintenance schedule determined by the determination unit.

15. A maintenance schedule determination method comprising:
acquiring, as information related to a plurality of components of devices included in each of a plurality of analysis systems each of which includes an analysis device analyzing a performance of a vehicle or a specimen which is a portion of the vehicle and a related device supporting analysis by the analysis device, at least one of warning information indicating an event leading to a failure of the component, information related to a sensitivity or performance of the component, and information related to a life limit of the component from the plurality of analysis systems; and
determining a maintenance schedule of the analysis system on the basis of the acquired information.

16. A computer program that causes a computer to perform a process including:
acquiring, as information related to a plurality of components of devices included in each of a plurality of analysis systems each of which includes an analysis device analyzing a performance of a vehicle or a specimen which is a portion of the vehicle and a related device supporting analysis by the analysis device, at least one of warning information indicating an event leading to a failure of the component, information related to a sensitivity or performance of the component, and information related to a life limit of the component from the plurality of analysis systems; and
determining a maintenance schedule of the analysis system on the basis of the acquired information.

17. A trained model generation method comprising:
performing reinforcement learning, which gives a reward corresponding to an operating rate of an analysis system, a burden related to a maintenance of the analysis system, or a frequency of occurrence of a defect in the analysis system, on a learning model, which receives, as information related to a plurality of components of devices included in a plurality of the analysis systems each of which includes an analysis device analyzing a performance of a vehicle or a specimen which is a portion of the vehicle and a related device supporting analysis by the analysis device, at least one of warning information indicating an event leading to a failure of the component, information related to a sensitivity or performance of the component, and information related to a life limit of the component as an input and outputs a maintenance schedule of the analysis system, to generate a trained model.
